# EUROPEAN PATENT SPECIFICATION

(11) **EP 1 690 443 B1**
(45) Date of publication and mention of the grant of the patent: **07.01.2009**
(21) Application number: 06101528.5
(22) Date of filing: 10.02.2006
(51) Int. Cl.: A01D 34/86

(54) **Cutter for grass, shrubs, tendrils and the like.**
Mäher für Rasen, Busch und dergleichen
Tondeuse à gazon, arbustes et similaires

(30) Priority: 10.02.2005 IT VI2005 038
(43) Date of publication of application: 16.08.2006
(73) Proprietor: BERTI Macchine Agricole S.P.A., 37042 Caldiero VR (IT)
(72) Inventor: BERTI, Mario, 37042, Caldiero (VR) (IT); BERTI, Filippo, 37042, Caldiero (VR) (IT)
(74) Representative: Bonini, Ercole

(56) References cited:
- EP-A- 1 266 551
- GB-A- 2 202 122
- US-A- 4 869 056
- US-A- 4 956 965
- US-A- 5 065 566

## Description

The invention described herein concerns a cutter for grass, shrubs, tendrils and the like, suitable for use on surfaces that require adaptability and versatility, like for example roadsides, canal banks, slopes, areas under vines and orchards.

As already known, in the field of agriculture and road maintenance it is necessary to clean and clear trafficked areas at the end of a specific work or during a specific season of the year.

For example, after the fruit harvest or the vintage the plants are pruned and following this operation a high quantity of branches and tendrils falls onto the ground and must be removed.

Analogously, especially during the spring, on roadsides and ditches there is a strong growth of wild grass that, if not uprooted, is unpleasant to look at, as it gives the impression of neglect, and creates situations of considerable danger near crossroads, where it reduces visibility for car drivers.

In order to facilitate cleaning in such situations, special machines, known as cutters, have been developed, which cut tendrils, shrubs, grass and the like and then let them fall onto the ground after shredding them.

The products deriving from the pruning of vineyards or orchards, but also of hedges or shrubs as well as of wild grass growing on roadsides are thus cut in small pieces and removed, clearing the ground.

The organic material obtained after the cutting operation is usually left on the ground on purpose, since it is an effective natural fertilizer for the surrounding vines and fruit trees.

The cutters presently available on the market, even though being offered in different specific models, substantially comprise a frame connected to a cutting unit via articulation means, said cutting unit being suited to cut grass, shrubs, tendrils, pruning residues and so on.

In most cases the frame is connected, via suitable fastening means, to vehicles like agricultural tractors, which pull the cutter across the surface where there are the above mentioned elements to be cut.

Therefore, according to the type of element to be cut, the cutting unit can be positioned at the side or at the back of the vehicle, adjacent to the grass, shrubs or tendrils, substantially parallel to the ground or against hedges or trees, following an inclined direction with respect to the ground itself.

The cutting unit is constituted by a rotating drum, or rotor, provided on its outer surface with blades that while the cutter advances provide for cutting the grass, shrubs or tendrils present in the way.

The rotor is driven by a power unit, generally belonging to the vehicle to which the cutter is connected, from which it receives motion via suitable transmission means.

The articulation means that connect the frame to the cutting unit comprise a pair of arms developing substantially in a longitudinal direction and positioned side by side, one end of which is connected to the frame, while the other end is connected to the cutting unit via corresponding pairs of pins that allow the cutting unit to move sideways.

The cutter also comprises means suited to incline the cutting unit, combined with the latter and designed to allow the cutting unit to be arranged in different positions, for example orthogonal to a horizontal plane while the cutter is transported by the agricultural tractor.

The cutter is also provided with means for shifting the cutting unit sideways, generally associated with one of the arms and allowing the cutting unit to be positioned at the side or at the back of the agricultural tractor, while keeping it parallel to the ground.

However, the cutters of the known type described above have the drawback that while moving forward they cannot prevent the cutting unit, and in particular the rotor blades, from being damaged in case of impact against a heavy obstacle or bulky compact material that cannot be cut, for example a big stone, a pile, a tree stump or a piece of metal.

This forces the operator, in this case the driver of the agricultural tractor on which the cutter is installed, to pay constant attention to the ground or to the surface where the cutter is working, in order to be able to stop the tractor timely and avoid any impact or contact.

This is not comfortable for the operator, because of his/her position with respect to the ground or surface where he/she is working and because the obstacles to be avoided are often hidden in the grass or shrubs that must be cut.

The above leads to a further drawback, represented by the fact that the operator has to check the ground while driving the tractor, which is extremely dangerous, especially when the cutter is used to cut grass along roadsides in conditions of heavy traffic.

The present invention aims to overcome the drawbacks just described.

In particular, the main aim of the invention is to carry out a cutter for grass, shrubs, tendrils and the like that makes it possible to practically and comfortably pass the obstacles it meets while advancing on the ground or surface to be treated, especially when said obstacles have considerable dimensions and cannot be cut.

It is a further aim of the invention to carry out a cutter whose components, like for example the cutting unit, in case of impact against obstacles of considerable weight and size are less liable than equivalent cutters of the known type to be seriously if not irreparably damaged.

The aims mentioned above have been achieved through the implementation of a cutter for grass, shrubs, tendrils and the like that, according to the contents of the main claim, comprises:
- a frame suited to be removably connected to a towing vehicle;
- a cutting unit suited to cut said grass, shrubs, tendrils and the like;
- a pair of arms developing in a substantially longitudinal direction and positioned side by side, each one of which is provided with a first end connected to said frame via first articulation means and with a second end connected to said cutting unit via second articulation means;
- moving means suited to move said cutting unit and said arms,
   and is characterized in that said first articulation means comprise:
- a first shaped body belonging to said frame and a second shaped body connected to said first shaped body and to one of said arms via a first rotation pin and to the other arm via a second rotation pin;
- elastic means, associated with said first and said second shaped body, suited to make the rotation of said second shaped body with respect to said first shaped body elastically yielding.

To advantage, the cutter carried out according to the invention can sustain the impact against particularly heavy and bulky objects, on which the cutting unit cannot work, without suffering serious damage.

Still to advantage, compared to the known art, the invention allows the operator to concentrate on driving the vehicle on which the cutter is generally installed, with all the consequent advantages in terms of physical strain and safety.

Further characteristics and details of the invention will be highlighted in the description of a preferred embodiment of the invention itself, provided as an example without limitation with reference to the attached drawings, wherein:
- Figure 1 is an axonometric view of the cutter carried out according to the invention in operating conditions;
- Figure 2 is an axonometric view of an enlarged detail of Figure 1;
- Figure 3 is a partially sectioned side view of an enlarged detail of Figure 2 in a first operating condition;
- Figure 4 shows the detail shown in Figure 3 in a second operating condition;
- Figure 5 is a top view of the detail shown in Figure 3;
- Figure 6 is an exploded view of the detail of Figure 3.

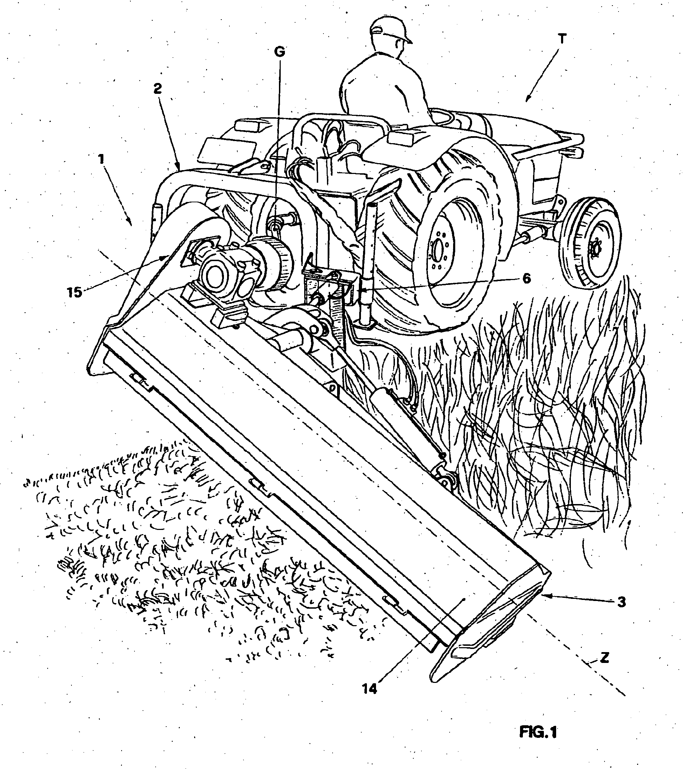

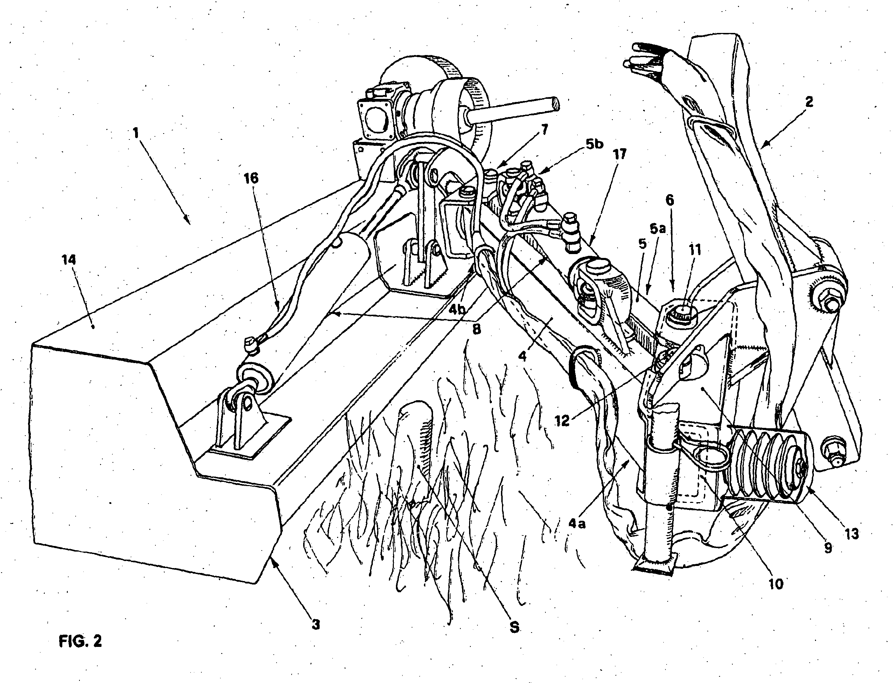

The cutter for grass, shrubs, tendrils and the like carried out according to the invention is shown in Figures 1 and 2, where it is indicated as a whole by 1, in operating conditions, associated with a vehicle, in this specific case an agricultural tractor T.

In both figures it can be observed that the cutter **1** comprises:
- a frame **2** removably connected to a towing vehicle, constituted by the above mentioned agricultural tractor T;
- a cutting unit, indicated as a whole by **3,** suited to cut grass, shrubs, tendrils and the like;
- a pair of arms **4, 5** developing in a substantially longitudinal direction and positioned side by side, each one of which is provided with a first end 4a, 5a connected to the frame 2 via first articulation means, indicated as a whole by **6,** and with a second end **4b, 5b** connected to the cutting unit **3** via second articulation means, indicated as a whole by **7;**
- moving means, indicated as a whole by **8,** suited to move the cutting unit **3** and the arms 4, 5.

According to the invention, as shown in greater detail in Figure 2, the first articulation means 6 comprise:
- a first shaped body 9, belonging to the frame 2, and a second shaped body 10, connected to the first shaped body 9 and to the arm 5 via a first rotation pin **11** and to the arm **4** via a second rotation pin **12;**
- elastic means, indicated as a whole by **13,** associated with the first shaped body 9 and with the second shaped body **10,** suited to make the rotation of the second shaped body **10** with respect to the first shaped body **9** elastically yielding.

Both the cutting unit **3** and the moving means **8** of the cutting unit **3** itself and of the arms **4, 5** are of the type known to those skilled in the art.

The cutting unit **3,** in fact, comprises a rotor provided with protruding blades, not visible in the drawings attached hereto, contained in a protection casing **14.**

The rotor is operated by power means belonging to the agricultural tractor **T** through the interposition of a cardan joint **G** and of a transmission unit, indicated as a whole by **15,** preferably but not necessarily of the belt type.

In other construction variants of the invention, not shown herein, the cutter may be provided with independent power means to make it self-propelled.

The moving means **8** comprise, according to a known construction form, a first pneumatic jack **16** for the inclination of the cutting unit **3** according to angles that, with respect to a horizontal reference plane, vary from +90° to -65°, and a second pneumatic jack **17** for the lateral shifting of the arms **4, 5** and, consequently, of the cutting unit **3.**

The cutter 1 is thus able to work at the side of the agricultural tractor T, for example on roadsides or on canal or ditch banks, or at its back, for example on areas under olive trees, vines, orchards and so on.

The condition in which the cutting unit 3 is inclined by 90° with respect to the horizontal reference plane typically corresponds to the configuration taken during transport of the cutter **1** by means of the agricultural tractor T, for example on any asphalted road.

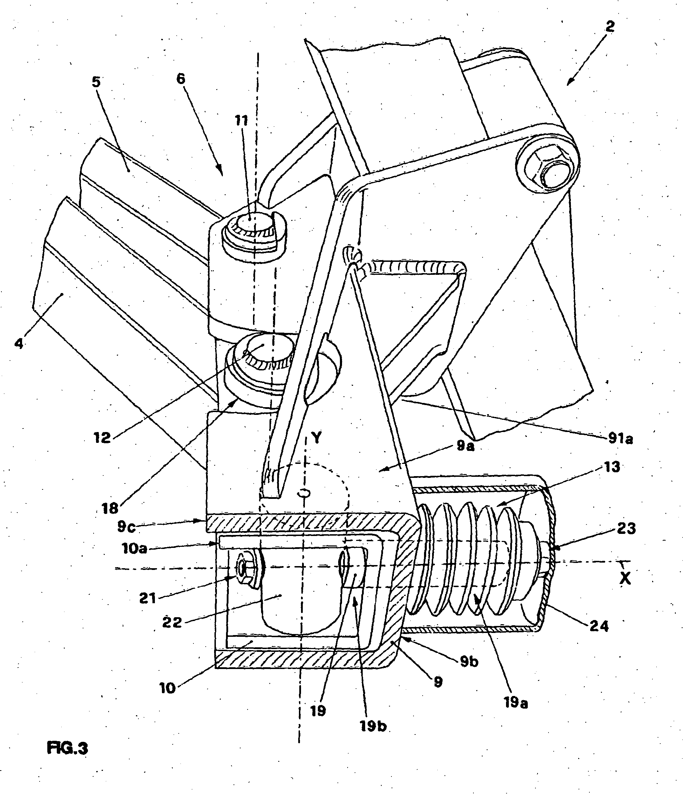

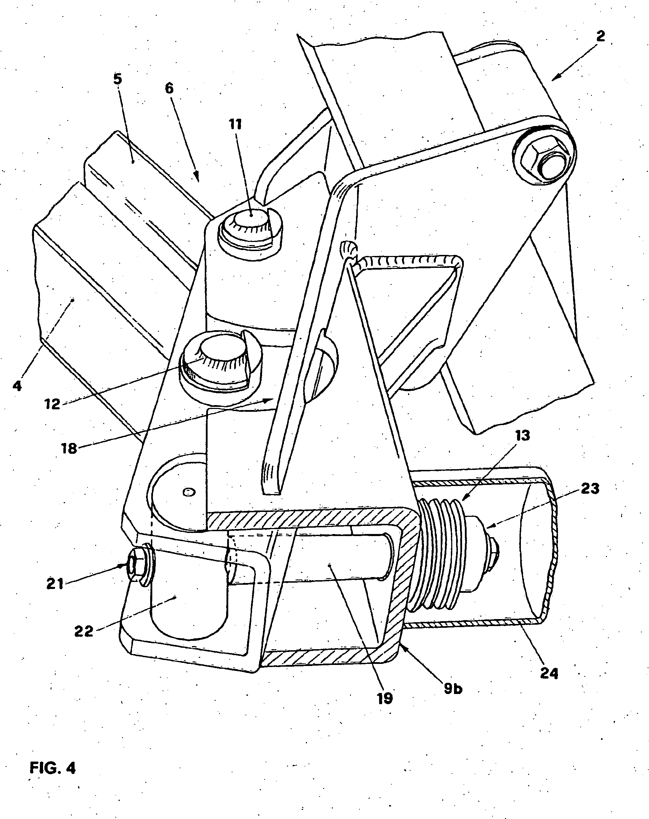

Figure 2, but more clearly the successive Figures 3 and 4 show that the first rotation pin **11** is inserted in through holes, not visible, coaxial to one another, made in the first shaped body **9** and in the second shaped body **10** and in the first end **5a** of the arm **5.**

Similarly, the second rotation pin **12** is inserted in through holes, not visible, too, coaxial to one another, made in the second shaped body **10** and in the first end **4a** of the arm **4.**

The second pin **12,** furthermore, is slidingly coupled to a slot **18** made in the first shaped body **9.**

More specifically, the slot **18** is made in the upper wall **9a** of the first shaped body **9,** preferably at the level of the intermediate area **91a** of the upper wall **9a** itself.

Figures 3 and 4 show that the cross section of the first shaped body **9** and of the second shaped body **10** has a C-shaped profile, with the second shaped body **10** substantially arranged inside the first shaped body **9,** where it can rotate freely.

According to the preferred embodiment of the invention described herein, the elastic means **13** are associated on the outside with a first end **19a** of a support body **19,** defining a first longitudinal axis **X** and inserted in first through holes made in the first shaped body **9** and in the second shaped body **10.**

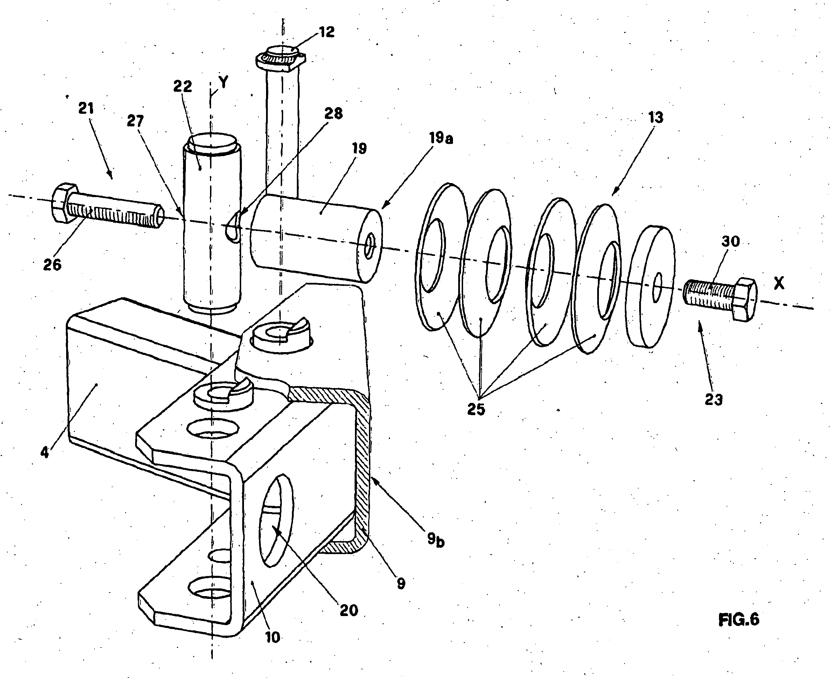

Among the first through holes, only the one made in the second shaped body **10** is visible, and it is shown in Figure 6 where it is indicated by **20.**

The support body **19** is connected through first fastening means, indicated as a whole by **21,** to a support core **22,** fixed to the second shaped body **10,** which defines a second longitudinal axis **Y** orthogonal to the first longitudinal axis **X.**

The elastic means **13** are permanently connected to the support body **19** via second fastening means, indicated as a whole by **23,** applied to the first end **19a** of the support body **19.**

In Figures 3, 4 and 5 it can also be observed that the elastic means **13** are contained inside a tubular element **24** applied to the outside of the side wall **9b** of the first shaped body **9.**

Moreover, the elastic means **13** are constituted by Belleville washers **25** and are arranged at the level of the free end **9c** of the first shaped body **9** and of the second shaped body **10,** respectively.

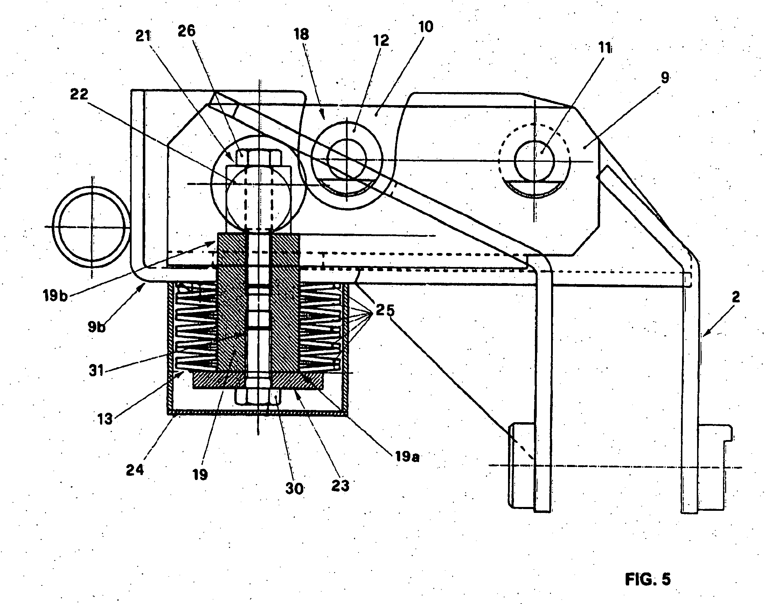

As can be seen in Figures 5 and 6, the first fastening means **21** are constituted by a screw **26** inserted in a pair of second through holes **27, 28,** coaxial to each other and to the first through hole **20,** made in the support core **22.**

The screw **26** meshes with a nut screw present on a second end **19b** of the support body **19.**

The second fastening means **23** are constituted by a second screw **30** meshing with a nut screw **31** present on the first end **19a** of the support body **19.**

During work, the operator who is driving the agricultural tractor **T** equipped with the cutter **1,** for example to remove high grass from roadsides, or the farmer who has to clear the ground under orchards, olive trees, vines and the like after harvesting the products, positions the cutting unit **3** at the side or at the back of the agricultural tractor **T,** according to the position of the ground where the operation must be carried out.

The power means of the agricultural tractor **T** and the transmission unit **15** set the rotor rotating to carry out the cutting operation, while the agricultural tractor T advances on the ground pulling the cutter **1** along with itself.

In normal operating conditions, the cutting unit **3** is arranged adjacent to the ground along a direction that defines a longitudinal axis **Z** that, if projected onto a horizontal reference plane, is substantially orthogonal to the advance direction of the agricultural tractor **T.**

In this phase, the first articulation means **6** assume the configuration visible in Figure 3, with the second shaped body **10** arranged almost completely inside the first shaped body **9,** while the elastic means **13** are released, with the Belleville washers **25** unloaded.

If on the ground where the cutting operation is being carried out the machine meets an obstacle **S** that the rotor blades cannot cut, like for example a very big stone, a piece of metal or a pile, the cutting unit **3** rotates clockwise thanks to the presence of the second articulation means **7.**

This rotation in turn is made possible by the connection of the second articulation means **7,** via the arms **4, 5,** to the first articulation means **6,** where the clockwise rotation of the second shaped body **10** with respect to the first shaped body **9** takes place, around the first rotation pin **11** and the second rotation pin **12** that slides inside the slot **18** until coming out of the same, if necessary.

At the same time, the compression of the elastic means **13** takes place, so that the first articulation means **6** move to the position shown in Figure 4.

In this way, the cutter **1** easily passes the obstacle **S,** avoiding any prolonged contact of the rotor and the blades with said obstacle and therefore preventing them from being seriously damaged, as it generally happens, on the contrary, with the known cutters.

The impact of the cutter **1** against the obstacle **S** during its advance on the ground is dampened by the first articulation means **6,** so that the operator can stop the agricultural tractor **T** rather comfortably, lift the cutting unit **3** through the hydraulic jack **16,** slightly advance with the agricultural tractor **T** to avoid the obstacle **S** and position the cutting unit **3** again in contact with the ground.

Therefore, the cutter carried out according to the invention avoids any prolonged contact of the cutting unit with objects that cannot be cut and that may damage the components, like for example the rotor and the blades.

In practice, the invention eliminates the negative consequences of the accidental impact against any obstacle, like the breakage of the cutting unit, which often occurs with the cutters of the known art.

The invention also allows the operator to concentrate on driving the agricultural tractor **T** that pulls the cutter **1,** and advantageously allows the machine to travel more straight on the ground than the machines of the known type, an important detail especially if the agricultural tractor T is used to cut grass along the sides of heavily trafficked roads.

Once the cutter **1** has passed the obstacle **S,** the first articulation means **6** return to the configuration shown in Figure 3 due to the return force exerted by the elastic means **13,** which makes the second shaped body **10** rotate anticlockwise with respect to the first shaped body **9** and brings it back inside the latter.

According to the above it is clear that the cutter for grass, shrubs, tendrils and the like that is the subject of the present invention achieves all the aims and offers all the advantages described.

Upon implementation modifications can be made to the cutter subject of the invention, consisting, for example, in a cutting unit and moving means of the latter and of the arms different from those described above as long as they fall within the scope of claim 1.

Furthermore, there may be embodiments in which the form of the shaped bodies is different from the form described herein, which however does not affect the advantages offered by the present patent.

Moreover, in other construction variants the elastic means that exert the return force on the second shaped body may be of a different type.

All the variants described and mentioned herein, but not represented in the attached drawings, must be considered protected by the present patent, provided that they fall within the scope of the following claims.

## Claims

1. Cutter (1) for grass, shrubs, tendrils and the like, comprising:
- a frame (2) suited to be removably connected to a towing vehicle (T);
- a cutting unit (3) suited to cut said grass, shrubs, tendrils and the like;
- a pair of arms (4, 5) developing in a substantially longitudinal direction and positioned side by side, each one of which is provided with a first end (4a, 5a) connected to said frame (2) via first articulation means (6) and with a second end (4b, 5b) connected to said cutting unit (3) via second articulation means (7);
- moving means (8) suited to move said cutting unit (3) and said arms (4, 5), **characterized in that** said first articulation means (6) comprise:
- a first shaped body (9) belonging to said frame (2) and a second shaped body (10) connected to said first shaped body (9) and to one of said arms (4, 5) via a first rotation pin (11) and to the other arm (4, 5) via a second rotation pin (12);
- elastic means (13), associated with said first (9) and said second shaped body (10), suited to make the rotation of said second shaped body (10) with respect to said first shaped body (9) elastically yielding.

2. Cutter (1) according to claim 1), **characterized in that** said first pin (11) is inserted in through holes coaxial to one another made in said first (9) and in said second shaped body (10) and in said first end (5a) of one of said arms (4, 5).

3. Cutter (1) according to claim 1), **characterized in that** said second pin (12) is inserted in through holes coaxial to one another made in said second shaped body (10) and in said first end (4a) of one of said arms (4; 5) and is slidingly coupled to a slot (18) obtained in said first shaped body (9).

4. Cutter (1) according to claim 3), **characterized in that** said slot (18) is obtained in the upper wall (9a) of said first shaped body (9).

5. Cutter (1) according to claim 4), **characterized in that** said slot (18) is obtained at the level of the intermediate area (91a) of said upper wall (9a) of said first shaped body (9).

6. Cutter (1) according to claim 1), **characterized in that** said elastic means (13) are associated on the outside with a first end (19a) of a support body (19) that defines a first longitudinal axis (X) and is inserted in first through holes (20) made in said first (9) and in said second shaped body (10).

7. Cutter (1) according to claim 6), **characterized in that** said support body (19) is connected via first fastening means (21) to a support core (22) fixed to said second shaped body (10) that defines a second longitudinal axis (Y) orthogonal to said first longitudinal axis (X).

8. Cutter (1) according to claim 7), **characterized in that** said first fastening means (21) are constituted by a first screw (26) inserted in a pair of second through holes (27, 28) coaxial to each other and to said first through holes (20), made in said support core (22), said screw (26) meshing with a nut screw (29) present on a second end (19b) of said support body (19).

9. Cutter (1) according to claim 7), **characterized in that** said elastic means (13) are permanently connected to said support body (19) via second fastening means (23) applied to said first end (19a) of said support body (19).

10. Cutter (1) according to claim 7), **characterized in that** said elastic means (13) are contained in a tubular element (24) applied outside the side wall (9b) of said first shaped body (9).

11. Cutter (1) according to claim 1), **characterized in that** said elastic means (13) are constituted by Belleville washers (25).

12. Cutter (1) according to claim 1), **characterized in that** said elastic means (3) are arranged at the level of the free end (9c, 10a) of said first (9) and said second shaped body (10).

13. Cutter (1) according to claim 9), **characterized in that** said second fastening means (23) are constituted by a second screw (30) meshing with a nut screw (31) present on said first end (19a) of said support body (19).

14. Cutter (1) according to claim 1), **characterized in that** the cross section of said first (9) and said second shaped body (10) has a C-shaped profile. X

15. Cutter (1) according to claim 1), **characterized in that** said second shaped body (10) is substantially positioned inside said first shaped body (9).

## Patentansprüche

1. Schneidevorrichtung (1) für Gras, Gebüsch, Ranken und dergleichen, umfassend:
- einen Rahmen (2), der dazu geeignet ist, mit einem Zugwagen (T) abnehmbar verbunden zu werden;
- eine Schneideeinheit (3), die dazu geeignet ist, das Gras, das Gebüsch, die Ranken und dergleichen zu schneiden;
- ein Paar aus Armen (4, 5), die sich in einer im Wesentlichen längs verlaufenden Richtung ausdehnen und nebeneinander angeordnet sind, wobei jeder mit einem ersten Ende (4a, 5a), das über erste Gelenksmittel (6) mit dem Rahmen (2) verbunden ist, und einem zweiten Ende (4b, 5b), das über zweite Gelenksmittel (7) mit der Schneideeinheit (3) verbunden ist, versehen ist;
- Bewegungsmittel (8), die dazu geeignet sind, die Schneideeinheit (3) und die Arme (4, 5) zu bewegen,
**dadurch gekennzeichnet, dass** die ersten Gelenksmittel (6) Folgendes umfassen:
- einen ersten Formkörper (9), der zum Rahmen (2) gehört, und einen zweiten Formkörper (10), der mit dem ersten Formkörper (9) und mit einem der Arme (4, 5) über einen ersten Drehstift (11) und mit dem anderen Arm (4, 5) über einen zweiten Drehstift (12) verbunden ist;
- elastische Mittel (13), die dem ersten (9) und dem zweiten Formkörper (10) zugeordnet sind und dazu geeignet sind, die Drehung des zweiten Formkörpers (10) in Bezug auf den ersten Formkörper (9) elastisch ausweichend zu machen.

2. Schneidevorrichtung (1) nach Anspruch 1), **dadurch gekennzeichnet, dass** der erste Stift (11) in zueinander koaxialen Durchgangslöchern, die im ersten (9) und im zweiten Formkörper (10) und im ersten Ende (5a) von einem der Arme (4, 5) ausgebildet sind, eingeführt ist.

3. Schneidevorrichtung (1) nach Anspruch 1), **dadurch gekennzeichnet, dass** der zweite Stift (12) in zueinander koaxialen Durchgangslöchern, die im zweiten Formkörper (10) und im ersten Ende (4a) von einem der Arme (4, 5) ausgebildet sind, eingeführt ist und gleitbar mit einem Schlitz (18), der im ersten Formkörper (9) erhalten ist, gekoppelt ist.

4. Schneidevorrichtung (1) nach Anspruch 3), **dadurch gekennzeichnet, dass** der Schlitz (18) in der oberen Wand (9a) des ersten Formkörpers (9) erhalten ist.

5. Schneidevorrichtung (1) nach Anspruch 4), **dadurch gekennzeichnet, dass** der Schlitz (18) auf der Höhe des Zwischenbereichs (91 a) der oberen Wand (9a) des ersten Formkörpers (9) erhalten ist.

6. Schneidevorrichtung (1) nach Anspruch 1), **dadurch gekennzeichnet, dass** die elastischen Mittel (13) an der Außenseite einem ersten Ende (19a) eines Trägerkörpers (19) zugeordnet sind, der eine erste Längsachse (X) definiert und in ersten Durchgangslöchern (20) eingeführt ist, die im ersten (9) und im zweiten Formkörper (10) ausgebildet sind.

7. Schneidevorrichtung (1) nach Anspruch 6), **dadurch gekennzeichnet, dass** der Trägerkörper (19) über erste Befestigungsmittel (21) mit einem Trägerkern (22) verbunden ist, der am zweiten Formkörper (10) angebracht ist und eine zweite Längsachse (Y) definiert, die orthogonal zur ersten Längsachse (X) steht.

8. Schneidevorrichtung (1) nach Anspruch 7), **dadurch gekennzeichnet, dass** die ersten Befestigungsmittel (21) aus einer ersten Schraube (26) gebildet sind, die in ein Paar aus zweiten Durchgangslöchern (27, 28) eingeführt ist, die zueinander und zu den ersten Durchgangslöchern (20) koaxial sind und im Trägerkern (22) ausgebildet sind, wobei die Schraube (26) in eine Schraubenmutter (29) eingreift, die an einem zweiten Ende (19b) des Trägerkörpers (19) angeordnet ist.

9. Schneidevorrichtung (1) nach Anspruch 7), **dadurch gekennzeichnet, dass** die elastischen Mittel (13) über zweite Befestigungsmittel (23), die am ersten Ende (19a) des Trägerkörpers (19) angebracht sind, dauerhaft mit dem Trägerkörper (19) verbunden sind.

10. Schneidevorrichtung (1) nach Anspruch 7), **dadurch gekennzeichnet, dass** die elastischen Mittel (13) in einem röhrenförmigen Element (24) enthalten sind, das außen an der Seitenwand (9b) des ersten Formkörpers (9) angebracht ist.

11. Schneidevorrichtung (1) nach Anspruch 1), **dadurch gekennzeichnet, dass** die elastischen Mittel (13) aus Tellerfedern (25) gebildet sind.

12. Schneidevorrichtung (1) nach Anspruch 1), **dadurch gekennzeichnet, dass** die elastischen Mittel (13) auf der Höhe des freien Endes (9c, 10a) des ersten (9) und des zweiten Formkörpers (10) angeordnet sind.

13. Schneidevorrichtung (1) nach Anspruch 9), **dadurch gekennzeichnet, dass** die zweiten Befestigungsmittel (23) aus einer zweiten Schraube (30) gebildet sind, die in eine Schraubenmutter (31) eingreift, die am ersten Ende (19a) des Trägerkörpers (19) angeordnet ist.

14. Schneidevorrichtung (1) nach Anspruch 1), **dadurch gekennzeichnet, dass** der Querschnitt des ersten (9) und des zweiten Formkörpers (10) ein C-förmiges Profil aufweist.

15. Schneidevorrichtung (1) nach Anspruch 1), **dadurch gekennzeichnet, dass** der zweite Formkörper (10) im Wesentlichen innerhalb des ersten Formkörpers (9) angeordnet ist.

## Revendications

1. Hacheuse (1) pour herbes, arbustes, sarments et similaires comprenant:
- un châssis (2) indiqué pour être relié de manière amovible à un véhicule tracteur (T);
- une unité de hachage (3) indiquée pour hacher lesdits herbes, arbustes, sarments et similaires;
- une paire de bras (4, 5) se développant dans une direction essentiellement longitudinale et positionnés l'un à côté de l'autre, chacun de ceux-ci est doté d'une première extrémité (4a, 5a) reliée audit châssis (2) par des moyens d'articulation (6) et d'une deuxième extrémité (4b, 5b) relié à ladite unité de hachage (3) par des moyens d'articulation (7);
- des moyens mobiles (8) indiqués pour déplacer ladite unité de hachage (3) et lesdits bras (4, 5),
**caractérisée en ce que** lesdits premiers moyens d'articulation (6) comprennent:
- un premier corps galbé (9) appartenant audit châssis (2) et un deuxième corps galbé (10) relié audit premier corps galbé (9) et à l'un desdits bras (4, 5) au moyen d'un premier pivot de rotation (11) et à l'autre bras (4, 5) au moyen d'un deuxième pivot de rotation (12);
- des moyens élastiques (13), associés audit premier (9) et audit deuxième corps galbé (10), indiqués pour rendre élastiquement souple ladite rotation dudit deuxième corps galbé (10) par rapport audit premier corps galbé (9).

2. Hacheuse (1) selon la revendication 1), **caractérisée en ce que** ledit premier pivot (11) est inséré dans des trous passants coaxiaux l'un par rapport à l'autre réalisés dans ledit premier (9) et dans ledit deuxième corps galbé (10) et dans ladite première extrémité (5a) d'un desdits bras (4, 5).

3. Hacheuse (1) selon la revendication 1), **caractérisée en ce que** ledit deuxième pivot (12) est inséré dans des trous passants coaxiaux l'un par rapport à l'autre réalisés dans ledit deuxième corps galbé (10) et dans ladite première extrémité (4a) d'un desdits bras (4, 5) et est relié de manière coulissante dans une rainure (18) obtenue dans ledit premier corps galbé (9).

4. Hacheuse (1) selon la revendication 3), **caractérisée en ce que** ladite rainure (18) est obtenue dans la paroi supérieure (9a) dudit premier corps galbé (9).

5. Hacheuse (1) selon la revendication 4), **caractérisée en ce que** ladite rainure (18) est obtenue à hauteur de la zone intermédiaire (91 a) de ladite paroi supérieure (9a) dudit premier corps galbé (9).

6. Hacheuse (1) selon la revendication 1), **caractérisée en ce que** lesdits moyens élastiques (13) sont associés à l'extérieur avec une première extrémité (19a) d'un corps de support (19) qui définit un premier axe longitudinal (X) et est inséré dans de premiers trous passants (20) réalisés dans ledit premier (9) et ledit deuxième corps galbé (10).

7. Hacheuse (1) selon la revendication 6), **caractérisée en ce que** ledit corps de support (19) est relié par de premiers moyens de fixation (21) à un noyau de soutien (22) fixé audit deuxième corps galbé (10) qui définit un deuxième axe longitudinal (Y) orthogonal audit premier axe longitudinal (X).

8. Hacheuse (1) selon la revendication 7), **caractérisée en ce que** lesdits premiers moyens de fixation (21) sont constitués par une première vis (26) insérée dans une paire de deuxièmes trous passants (27, 28) coaxiaux l'un par rapport à l'autre et auxdits premiers trous passants (20), réalisés dans ledit noyau de soutien (22), ladite vis (26) s'engageant avec une vis mère (29) présente sur une deuxième extrémité (19b) dudit corps de support (19).

9. Hacheuse (1) selon la revendication 7), **caractérisée en ce que** lesdits moyens élastiques (13) sont reliés de manière permanente audit corps de support (19) par de deuxièmes moyens de fixation (23) appliqués à ladite première extrémité (19a) dudit corps de support (19).

10. Hacheuse (1) selon la revendication 7), **caractérisée en ce que** lesdits moyens élastiques (13) sont contenus dans un élément tubulaire (24) appliqué à l'extérieur de la paroi latérale (9b) dudit premier corps galbé (9).

11. Hacheuse (1) selon la revendication 1), **caractérisée en ce que** lesdits moyens élastiques (13) sont constitués par des rondelles Belleville (25).

12. Hacheuse (1) selon la revendication 1), **caractérisée en ce que** lesdits moyens élastiques (13) se trouvent à hauteur de l'extrémité libre (9c, 10a) dudit premier (9) et dudit deuxième corps galbé (10).

13. Hacheuse (1) selon la revendication 9), **caractérisée en ce que** lesdits deuxièmes moyens de fixation (23) sont constitués par une deuxième vis (30) s'engageant avec une vis mère (31) présente sur ladite première extrémité (19a) dudit corps de support (19).

14. Hacheuse (1) selon la revendication 1), **caractérisée en ce que** la section transversale dudit premier (9) et dudit deuxième corps galbé (10) présente un profil en C.

15. Hacheuse (1) selon la revendication 1), **caractérisée en ce que** ledit deuxième corps galbé (10) est essentiellement positionné à l'intérieur dudit premier corps galbé (9).
